# FASCICULE DE BREVET EUROPEEN

(11) **EP 2 443 705 B1**
(45) Date de publication et mention de la délivrance du brevet: **29.04.2015**
(21) Numéro de dépôt: 10734261.0
(22) Date de dépôt: 17.06.2010
(51) Int. Cl.: H01S 3/082, H01S 3/06, H01S 3/108, H01S 3/113, H01S 3/117, H01S 3/30, H01S 3/067

(54) **SYSTÈME D'ÉMISSION D'UNE LUMIÈRE POLYCHROMATIQUE A SOUS-CAVITÉS COUPLÉES**
SYSTEM ZUR AUSSTRAHLUNG VON POLYCHROMATISCHEM LICHT MIT GEKOPPELTEN SUBKAVITÄTEN
SYSTEM FOR EMITTING A POLYCHROMATIC LIGHT, PROVIDED WITH COUPLED SUB-CAVITIES

(30) Priorité: 19.06.2009 FR 0902986
(43) Date de publication de la demande: 25.04.2012
(73) Titulaire: Centre National de la Recherche Scientifique (CNRS), 75794 Paris Cedex 16 (FR); Compagnie Industrielle Des Lasers Cilas (Cilas), 45000 Orleans (FR)
(72) Inventeur: COUDERC, Vincent, F-87430 Verneuil / Vienne (FR); LEPROUX, Philippe, Paul, F-87000 Limoges (FR); DOUTRE, Florent, F-06000 Nice (FR); PAGNOUX, Dominique, F-87100 Limoges (FR)
(74) Mandataire: Novagraaf Technologies
(86) Numéro de dépôt international: PCT/FR2010/051215
(87) Numéro de publication internationale: WO 2010/146315

(56) Documents cités:
- FR-A1- 2 717 632
- FR-A1- 2 867 574
- CHERNIKOV S V ET AL: "SUPERCONTINUUM SELF-Q-SWITCHED YTTERBIUM FIBER LASER" OPTICS LETTERS, OSA, OPTICAL SOCIETY OF AMERICA, WASHINGTON, DC, US, vol. 22, no. 5, 1 mars 1997 (1997-03-01), pages 298-300, XP000684677 ISSN: 0146-9592
- JALALI B ET AL: "Optical continuum generation on a silicon chip" PROCEEDINGS OF THE SPIE - THE INTERNATIONAL SOCIETY FOR OPTICAL ENGINEERING SPIE-INT. SOC. OPT. ENG USA, vol. 5931, no. 1, 2005, pages 59310Q-1, XP040209092 ISSN: 0277-786X
- LEE J H ET AL: "Experimental investigation of continuous-wave supercontinuum ring laser composed of clad-pumped Er/Yb codoped fiber and highly-nonlinear optical fiber" OPTICS COMMUNICATIONS, NORTH-HOLLAND PUBLISHING CO. AMSTERDAM, NL, vol. 266, no. 2, 15 octobre 2006 (2006-10-15), pages 681-685, XP025252068 ISSN: 0030-4018 [extrait le 2006-10-15]

## Description

### DOMAINE TECHNIQUE

La présente invention se rapporte à la génération d'une lumière polychromatique à spectre continu.

Elle se rapporte plus particulièrement à un système d'émission d'une lumière polychromatique, comprenant une cavité laser, des moyens de pompage optique de cette cavité laser aptes à délivrer un rayonnement selon au moins une longueur d'onde d'excitation, ainsi que des moyens de guidage de lumière agencés, en cas d'excitation par ce rayonnement dans un régime d'interaction non linéaire, pour délivrer sur une sortie une lumière polychromatique.

### ÉTAT DE LA TECHNIQUE ANTERIEURE

Un tel système est connu du document de brevet FR 2 867 574, qui décrit quant à lui un dispositif de génération d'une lumière polychromatique, comprenant des moyens de pompage optique aptes à délivrer un rayonnement d'au moins deux longueurs d'onde d'excitation différentes, ainsi que des moyens de guidage de lumière agencés, en cas d'excitation par le rayonnement dans un régime d'excitation non linéaire, pour délivrer sur une sortie une lumière polychromatique. Les moyens de guidage comportent à cet effet un milieu non-linéaire, qui permet la mise en place de plusieurs conversions de fréquences. Les moyens de pompage optique comportent une cavité laser. Les moyens de guidage permettent donc une extension importante du spectre de la lumière oscillant dans la cavité laser.

Le document de brevet FR 2 884 623 décrit quant à lui un dispositif de génération d'une lumière polychromatique, comprenant des moyens de pompage optique, des moyens de guidage de la lumière et des moyens d'injection sélective. Les moyens de pompage sont aptes à délivrer un premier rayonnement d'une première longueur d'onde. Les moyens d'injection sélective permettent d'injecter le premier rayonnement issu des moyens de pompage dans les moyens de guidage, ces derniers étant agencés pour générer une harmonique correspondant à l'injection sélective et pour délivrer en sortie une lumière polychromatique, par excitation non linéaire issue de ce premier rayonnement et de cette harmonique. Les moyens de guidage comprennent par exemple une fibre optique microstructurée et sont sensiblement de type monomode pour le premier rayonnement et sensiblement de type multimode pour l'harmonique.

Ces dispositifs de l'art antérieur constituent ainsi des sources de continuum basés sur un pompage extracavité d'une fibre non linéaire. Ils ne permettent cependant pas d'atteindre une émission laser à large spectre présentant une stabilité (ou gigue) temporelle et spectrale suffisante, ce qui rend le rayonnement produit inutilisable pour un certain nombre d'applications.

### OBJET DE L'INVENTION

La présente invention entend donc permettre l'obtention d'une lumière large bande à faible gigue temporelle et spectrale, tout en présentant des caractéristiques de simplicité, de stabilité et d'encombrement satisfaisants.

Dans ce but, la présente invention est du type décrit ci-dessus et présente la particularité d'avoir ses moyens de guidage disposés au sein d'une cavité formée d'au moins deux sous-cavités, parmi lesquelles une première sous-cavité forme la cavité laser et une seconde sous-cavité comporte les moyens de guidage, ces première et seconde sous-cavités étant couplées l'une à l'autre, de manière interférométrique.

Cette solution permet de dissocier et de mettre en cascade, d'une part, la formation d'une lumière laser monochromatique ou quasi monochromatique, issue de la cavité laser pompée et, d'autre part, l'étalement de son spectre grâce à l'utilisation de l'élément non linéaire que constituent les moyens de guidage de la lumière. Les problèmes de gigue temporelle sont résolus en introduisant dans cette même cavité un système optoélectronique actif de déclenchement sans gigue. La lumière ainsi générée peut également être de forte énergie par la disposition en cascade d'au moins un milieu à gain. En outre, la cavité laser formant une première sous-cavité couplée à une seconde sous-cavité comprenant l'élément non linéaire, il s'ensuit que l'ensemble est intégré au sein d'un résonateur unique, favorisant une compacité et une simplicité du dispositif

L'approche ayant conduit à cette solution a consisté à dissocier partiellement la formation de l'impulsion monochromatique et l'élargissement spectral. Le but était d'éviter que les éléments non-linéaires à l'origine de l'étalement spectral ne perturbent la formation de l'impulsion source monochromatique. Pour réaliser cela, nous avons souhaité isoler partiellement la formation d'une impulsion de pompe monochromatique dans une première sous cavité courte et confiner l'extension spectrale dans une autre sous-cavité. Ces deux cavités sont alors couplées de manière partielle par l'intermédiaire d'un miroir commun. La première sous-cavité est sub-centimétrique afin d'engendrer une impulsion courte monochromatique. La seconde cavité déclenche la première et possède une grande longueur afin d'avoir la capacité à initier un effet laser au sein de la première cavité courte.

De préférence, les moyens de guidage comprennent un guide de lumière. Dans ce cas, il peut être prévu que le guide de lumière soit intégré sur un substrat optique.

De préférence, ces moyens de guidage comprennent une fibre optique de dimensions choisies. Dans ce cas, il peut être avantageusement prévu que la fibre optique soit microstructurée.

Avantageusement, les deux sous-cavités comportent à chacune de leurs extrémités un moyen de réflexion partielle de la lumière. A ce titre, une variante particulièrement avantageuse consiste à utiliser des miroirs de Bragg en guise de moyens de réflexion partielle de la lumière.

Selon un mode particulier de réalisation, le couplage des deux sous-cavités s'opère par la disposition d'un moyen de réflexion partielle commun auxdites deux sous-cavités.
De préférence, la première sous-cavité comporte un milieu à gain, afin d'amplifier la lumière émise par les moyens de pompage de cette sous-cavité, sans toutefois atteindre le seuil d'émission laser de la cavité.

Selon un mode particulier de réalisation visant à générer des impulsions lumineuses large bande, il est prévu que la première sous-cavité comporte des moyens de génération d'une impulsion courte.

Dans ce dernier cas, les moyens de génération d'une impulsion courte comprennent avantageusement un absorbant saturable. Ce type d'élément est en effet particulièrement adapté pour permettre l'accumulation d'énergie lumineuse dans la cavité laser pendant une durée déterminée, pour ensuite la libérer de manière instantanée ce qui engendre une impulsion de courte durée.

Pour réaliser le déclenchement de l'impulsion courte, la seconde sous-cavité peut comporter des moyens de déclenchement externe de celle-ci agencés de sorte que le déclenchement de cette seconde sous-cavité provoque le départ de l'impulsion courte générée par la première sous-cavité.

Selon un mode particulier de mise en oeuvre de la seconde sous-cavité, les moyens de déclenchement externe comprennent un modulateur acousto-optique.

De préférence les moyens de pompage optique sont agencés de manière à délivrer un rayonnement de puissance sensiblement proche du seuil d'émission laser de la première sous-cavité sans l'atteindre. La gigue temporelle est en effet d'autant plus faible que l'on est loin du seuil d'émission et que l'on a la capacité à passer largement au-dessus de ce seuil avec l'action de la seconde sous-cavité active.

Aux fins de déclencher de manière synchronisée le départ d'une impulsion courte, les moyens de déclenchement externe sont synchronisés.

### BREVE DESCRIPTION DES DESSINS

L'invention sera mieux comprise à la lecture de la description détaillée d'un exemple non limitatif de réalisation, accompagnée de figures représentant respectivement :
- la figure 1, un schéma représentant un système laser selon un premier mode de réalisation de l'invention, et
- la figure 2, un schéma représentant un système laser selon un second mode de réalisation de l'invention.

### EXPOSE DETAILLE DE MODES DE REALISATION PARTICULIERS

On entendra par lumière polychromatique dans le présent brevet une lumière dont le spectre est sensiblement continu et non discrétisé en longueur d'onde sur une large bande.

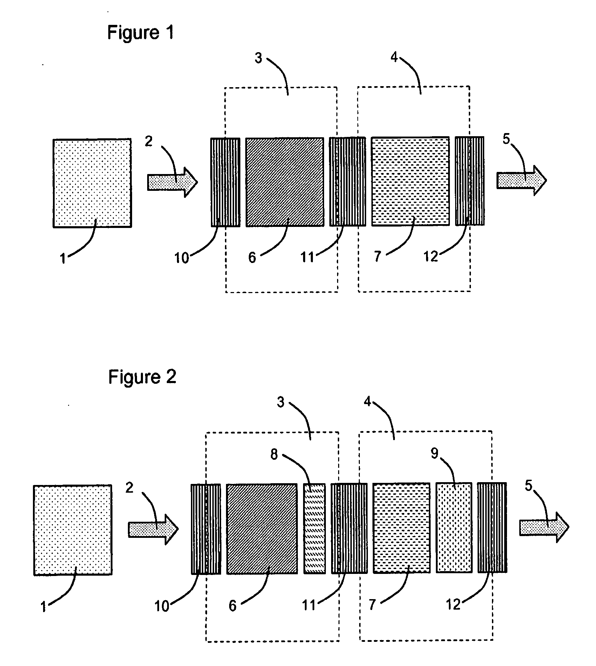

En référence à la figure 1, un système d'émission lumineuse large bande selon un premier mode de réalisation de l'invention comporte des moyens de pompage optique 1, ainsi qu'une cavité formée de deux sous-cavités 3 et 4 couplées l'une à l'autre. Il peut être disposé dans cette cavité un nombre de sous-cavités supérieur à deux sans pour autant sortir du cadre du présent brevet.

Le couplage entre cavités est un couplage interférométrique dans le sens où, et comme il apparaîtra clairement à la lecture de la description qui suit, le couplage joue sur la même longueur d'onde et peut donner lieu à des pertes liées à la superposition en phase ou non des différentes composantes du rayonnement laser. Ainsi, un changement dans une cavité impose un changement dans les autres cavités.

Les moyens de pompage optique 1 permettent de réaliser l'inversion de population du milieu amplificateur 6 situé dans la première cavité 3.

Ces moyens de pompage peuvent par exemple se présenter sous la forme d'une diode laser quasi monochromatique ou d'une lampe flash.

Selon ce premier mode de réalisation de l'invention, les moyens de pompage optique 1 peuvent fonctionner soit selon un mode impulsionnel et synchronisé temporellement, soit selon un mode quasi continu ou continu.

La première sous-cavité 3 comprend un milieu à gain 6, qui peut prend la forme d'une micropuce, par exemple un microcristal laser de type YAG 1,1%. Cette première sous-cavité 3 comprend également deux miroirs de Bragg ou diélectriques 10 et 11, disposés à chaque extrémité de la sous-cavité 3. Cette sous-cavité 3 forme ainsi une cavité laser apte à être excitée sous l'effet du rayonnement 2 délivré par les moyens de pompage optique 1.

La seconde sous-cavité 4 comprend un élément non-linéaire 7 entouré de deux miroirs de Bragg ou diélectriques 11 et 12. Cet élément 7 forme des moyens de guidage de la lumière issue de la première sous-cavité 3. Il permet d'étaler le spectre de la lumière issue de la cavité laser 3 afin de délivrer en sortie, une lumière polychromatique correspondant à un continuum. Cette cavité 4 est sensiblement plus longue (> X10) que la première cavité 3.

Ces moyens de guidage 7 peuvent comprendre un guide de lumière, constitué de fibres ou de cristaux, comportant éventuellement un circuit intégré. Le guide de lumière peut être une fibre optique, par exemple une fibre double coeur concentrique, d'une longueur de quelques mètres, étant entendu que l'homme du métier saura choisir la forme et les dimensions de cette fibre en fonction de l'application envisagée, notamment du point de vue des longueurs d'onde de la lumière à émettre. En effet, l'homme du métier notera l'importance du choix de la fibre (unimodale, multimodale, etc.) en ce qui concerne ses modes d'excitation.

Dans le cas d'une fibre optique, celle-ci peut être microstructurée, ce qui présente l'avantage de constituer une structure opto-géométrique, modifiable lors de sa création, qui permet un contrôle du profil de dispersion et autorise un guidage de la lumière sur toute la bande de transmission du matériau de la fibre.

Ces moyens de guidage 7 sont disposés sur le chemin de la cavité laser 3 suivant la direction longitudinale de cette cavité. Dans ces conditions, la lumière issue de la sous-cavité 3 est injectée dans les moyens de guidage 7. Dès lors, en cas d'excitation, par le rayonnement issu de la cavité 3, de ces moyens de guidage, il est possible d'obtenir une lumière polychromatique 5.

Aux fins de réaliser de manière optimale l'injection de la lumière issue de la cavité laser 3 dans le guide de lumière (ou tout autre moyen de guidage de lumière apte à permettre la naissance d'interactions non linéaires), il peut être prévu l'introduction d'une lentille convergente en amont dudit guide, ainsi qu'une orientation particulière du faisceau injecté dans ledit guide.

Un élément d'amplification lumineuse peut également être prévu dans la seconde sous-cavité 4, afin de générer une lumière large bande de plus forte énergie.

Le couplage des deux sous-cavités 3 et 4 s'opère par la disposition commune du miroir 11, ce dernier étant à une extrémité de la première sous-cavité 3 et à l'autre extrémité de la seconde sous-cavité 4. Les miroirs de Bragg ou diélectriques 10 et 12 - aux deux autres extrémités des deux sous-cavités 3 et 4 - constituent alors les deux miroirs entourant la cavité principale. On notera ainsi que les sous-cavités forment, de par leur couplage, une troisième cavité : la cavité principale.

Pour une diode de pompe 1 présentant un maximum d'émission à une longueur d'onde de 808 nanomètres et une puissance moyenne de 3 watts, il peut être par exemple utilisés un miroir 10 dont le maximum de réflexion se situe à 1064 nanomètres et le minimum à 808 nanomètres, un miroir 11 de coefficient de réflexion 87% à 1064nm et un miroir 12 de coefficient de réflexion 95% à 1064nm.

On réalise ainsi un système d'émission lumineuse large bande, à partir d'une lumière laser monochromatique ou quasi monochromatique initialement formée au sein de la cavité laser 3, par élargissement du spectre de cette lumière laser. Cette lumière polychromatique, par la mise en cascade et le couplage des deux sous-cavités, présente une bonne stabilité temporelle avec des impulsions courtes (subnanosecondes).

En tant que résonateur unique formé de deux sous-cavités couplées l'une à l'autre, le système d'émission lumineuse large bande est relativement compact.

Concernant la puissance des moyens de pompage optique, l'homme du métier notera que l'efficacité de conversion des photons d'excitation vers les photons du continuum dépend de la puissance crête délivrée par la première cavité 3 et de la puissance moyenne du module de pompage optique 1, des dimensions du coeur ainsi que de la longueur de la fibre 7. Ainsi un module de pompage optique délivrant une forte puissance lumineuse (toutes longueurs d'onde d'excitation confondues) permet l'utilisation d'une fibre optique (ou plus généralement d'un guide de lumière).

Concernant l'élargissement spectral correspondant à la génération de la lumière polychromatique large spectre, il peut être envisagé de l'effectuer en un seul passage dans la fibre 7, ou bien en plusieurs passages.

Concernant le choix du ou des longueurs d'onde d'excitation, celles-ci peuvent être déterminées afin qu'il apparaisse un élargissement spectral homogène et symétrique de part et d'autre de l'une des longueurs d'onde de pompe, ainsi qu'une minimisation des composantes Raman.

On décrit maintenant un second mode de réalisation de l'invention, permettant de générer des impulsions courtes à large spectre et faible gigue temporelle et spectrale, en référence à la figure 2.

Dans cette variante, la première sous-cavité 3 comporte également un absorbant saturable passif 8, formé par exemple de CR4 + (absorbant) abs 3 cm⁻¹. Il peut être prévu que les éléments 6 et 8 soient compris dans un seul et même composant.

La seconde sous-cavité 4 comprend un déclencheur externe 9, qui peut être par exemple un modulateur (acousto-optique, électro-optique ou micro-opto-électro-mécanique), un autre laser, par exemple un microlaser à impulsions courtes, ou une diode laser picoseconde.

Les moyens de pompage optique 1 de la première sous-cavité 3 sont disposés vis-à-vis de cette sous-cavité de façon à ne pas atteindre le seuil d'émission laser de celle-ci, tout en étant sensiblement proche.

Par le couplage entre les deux sous-cavités, l'absorbant saturable 8 de la première sous-cavité 3 permet d'éviter le démarrage du laser en introduisant des pertes optiques et engendre alors un stockage de l'énergie lumineuse au sein du cristal amplificateur 6. Le déclenchement externe opéré par le déclencheur 9 de la seconde sous-cavité 4 permet de déclencher, en cascade, la cavité 3 produisant alors une impulsion monochromatique.

On obtient ainsi la génération d'une impulsion lumineuse de courte durée et de forte énergie, commandée par un déclencheur externe à la sous-cavité 3 pompée. La fréquence de fonctionnement du déclencheur 9 détermine alors la fréquence d'émission des impulsions lumineuses issues du système. La durée de l'impulsion optique engendrée est déterminée par la longueur de la cavité 3 et par le type d'absorbant saturable positionné à l'intérieur.

Cette impulsion monochromatique traverse le miroir de couplage 11 et engendre un spectre large par l'intermédiaire du milieu non linéaire 7.

On réalise ainsi un continuum intracavité en régime « Q-SWITCH » stable. Ce spectre large bande est généré dans la cavité amplificatrice (c'est-à-dire la sous-cavité 4), donc dans une cavité externe à la sous-cavité 3 mais au sein de la cavité formée par les miroirs 10 et 12.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

En particulier, il peut être envisagé de disposer plusieurs systèmes d'émission lumineuse objets de l'invention, soit en cascade, soit en parallèle, soit les deux, en fonction des applications envisagées et des performances souhaitées.

Egalement, ce système peut être adapté en fonction de l'application envisagée, notamment pour des applications dans le domaine des télécommunications, de la biophotonique, en particulier pour le diagnostic ou le tri cellulaire, de l'ophtalmologie, de la tomographie optique cohérente, ou de la microscopie confocale.

## Revendications

1. Système d'émission d'une lumière polychromatique, comprenant une cavité laser (3), des moyens (1) de pompage optique de la cavité laser (3), ladite cavité laser (3) étant apte à délivrer un rayonnement selon au moins une longueur d'onde d'excitation, et des moyens (7) de guidage de lumière agencés, en cas d'excitation par ledit rayonnement dans un régime d'interaction non linéaire, pour délivrer sur une sortie (5) une lumière polychromatique, **caractérisé en ce que** les moyens (7) de guidage sont disposés au sein d'une cavité formée d'au moins deux sous-cavités (3,4), parmi lesquelles une première sous-cavité (3) forme ladite cavité laser (3) et une seconde sous-cavité (4) comporte lesdits moyens (7) de guidage, lesdites première (3) et seconde (4) sous-cavités étant couplées de manière interférométrique.

2. Système d'émission selon la revendication 1, dans lequel les moyens (7) de guidage comprennent un guide de lumière.

3. Système d'émission selon la revendication précédente, dans lequel le guide de lumière est réalisé sur un substrat optique planaire.

4. Système d'émission selon l'une des revendications 1 à 3, dans lequel les moyens (7) de guidage comprennent au moins une fibre optique de dimensions choisies.

5. Système d'émission selon la revendication précédente, dans lequel la fibre optique est microstructurée et/ou dopée et/ou à dimension transverse décroissante en fonction de la propagation (« taper »).

6. Système d'émission selon l'une des revendications précédentes, dans lequel les deux sous-cavités (3,4) comportent à chacune de leurs extrémités un moyen (10, 11, 12) de réflexion partielle de la lumière.

7. Système d'émission selon la revendication précédente, dans lequel les moyens (10, 11, 12) de réflexion partielle de la lumière sont des miroirs de Bragg.

8. Système d'émission selon la revendication 7, dans lequel le couplage des deux sous-cavités (3, 4) s'opère par la disposition d'un moyen (11) de réflexion partielle commun auxdites deux sous-cavités (3,4).

9. Système d'émission selon l'une des revendications précédentes, dans lequel la première sous-cavité (3) comporte des moyens (8) de génération d'une impulsion courte.

10. Système d'émission selon l'une des revendications précédentes, les moyens (8) de génération d'une impulsion courte comprennent un absorbant saturable.

11. Système d'émission selon la revendication 10, dans lequel la seconde sous-cavité (4) comporte des moyens (9) de déclenchement externe de celle-ci agencés de sorte que le déclenchement de ladite seconde sous-cavité (4) provoque le départ de l'impulsion courte générée par ladite première sous-cavité (3).

12. Système d'émission selon la revendication précédente, dans lequel les moyens (9) de déclenchement externe comprennent un modulateur acousto-optique.

13. Système d'émission selon la revendication 12, dans lequel les moyens (1) de pompage optique sont agencés de manière à délivrer un rayonnement (2) de puissance sensiblement proches du seuil d'émission laser de la première sous-cavité (3) sans l'atteindre.

14. Système d'émission selon l'une des revendications 12 ou 13, dans lequel les moyens (9) de déclenchement externe sont synchronisés.

## Patentansprüche

1. System zur Ausstrahlung eines polychromatischen Lichts, umfassend einen Laserhohlraum (3), Mittel (1) zum optischen Pumpen des Laserhohlraums (3), wobei der Laserhohlraum (3) ausgelegt ist, um eine Strahlung gemäß mindestens einer Anregungswellenlänge auszugeben, und Mittel (7) zur Führung des Lichts, die, im Fall einer Anregung durch die Strahlung in einem nicht linearen Wechselwirkungsraum, angeordnet sind, um auf einem Ausgang (5) ein polychromatisches Licht auszugeben, **dadurch gekennzeichnet, dass** die Führungsmittel (7) innerhalb eines Hohlraums angeordnet sind, der aus mindestens zwei Unterhohlräumen (3, 4) gebildet ist, von denen ein erster Unterhohlraum (3) den Laserhohlraum (3) bildet und ein zweiter Unterhohlraum (4) die Führungsmittel (7) umfasst, wobei der erste (3) und der zweite (4) Unterhohlraum auf interferometrische Weise gekoppelt sind.

2. System zur Ausstrahlung nach Anspruch 1, wobei die Führungsmittel (7) eine Lichtführung umfassen.

3. System zur Ausstrahlung nach dem vorhergehenden Anspruch, wobei die Lichtführung auf einem planaren optischen Substrat erfolgt.

4. System zur Ausstrahlung nach einem der Ansprüche 1 bis 3, wobei die Führungsmittel (7) mindestens eine optische Faser mit gewählten Abmessungen umfassen.

5. System zur Ausstrahlung nach dem vorhergehenden Anspruch, wobei die optische Faser mikrostrukturiert und/oder dotiert und/oder mit abnehmender transversaler Abmessung je nach der Ausbreitung ("Taper") ist.

6. System zur Ausstrahlung nach einem der vorhergehenden Ansprüche wobei die zwei Unterhohlräume (3, 4) an jedem ihrer Enden ein Mittel (10, 11, 12) zur teilweisen Rückstrahlung des Lichts umfassen.

7. System zur Ausstrahlung nach dem vorhergehenden Anspruch, wobei die Mittel (10, 11, 12) zur teilweisen Rückstrahlung des Lichts Bragg-Spiegel sind.

8. System zur Ausstrahlung nach Anspruch 7, wobei die Kopplung der zwei Unterhohlräume (3, 4) durch die Anordnung eines Mittels (11) zur teilweisen Rückstrahlung, die den zwei Unterhohlräumen (3, 4) gemeinsam ist, erfolgt.

9. System zur Ausstrahlung nach einem der vorhergehenden Ansprüche, wobei der erste Unterhohlraum (3) Mittel (8) zur Erzeugung eines kurzen Impulses umfasst.

10. System zur Ausstrahlung nach einem der vorhergehenden Ansprüche wobei die Mittel (8) zur Erzeugung eines kurzen Impulses ein sättigbares Absorbens umfassen.

11. System zur Ausstrahlung nach Anspruch 10, wobei der zweite Unterhohlraum (4) Mittel (9) zur externen Auslösung dieses umfasst, die so angeordnet sind, dass die Auslösung des zweiten Unterhohlraums (4) den Beginn des kurzen Impulses, erzeugt vom ersten Unterhohlraum (3) hervorruft.

12. System zur Ausstrahlung nach dem vorhergehenden Anspruch, wobei die Mittel (9) zur externen Auslösung einen akusto-optischen Modulator umfassen.

13. System zur Ausstrahlung nach Anspruch 12, wobei die Mittel (1) zum optischen Pumpen derart angeordnet sind, dass sie eine Strahlung (2) mit einer Leistung ausgeben, die im Wesentlichen nahe der Schwelle der Laserausstrahlung des ersten Unterhohlraums (3) ist, ohne sie zu erreichen.

14. System zur Ausstrahlung nach einem der Ansprüche 12 oder 13, wobei die Mittel (9) zur externen Auslösung synchronisiert sind.

## Claims

1. System for emitting a polychromatic light, comprising a laser cavity (3), means (1) for optically pumping the laser cavity (3), said laser cavity being able to emit radiation according to at least one excitation wavelength, and light guiding means (7) arranged, in the event of excitation by said radiation in a non-linear interaction regime, to supply to an outlet (5) a polychromatic light, **characterized in that** the guiding means (7) are arranged inside a cavity formed by at least two sub-cavities (3, 4), among which a first sub-cavity (3) forms said laser cavity (3) and a second sub-cavity (4) comprises said guiding means (7), said first (3) and second (4) sub-cavities being coupled interferometrically.

2. System for emitting according to claim 1, wherein the guiding means (7) comprise a light guide.

3. System for emitting as claimed in the preceding claim, wherein the light guide is carried out on a planar optical substrate.

4. System for emitting according to one of claims 1 to 3, wherein the guiding means (7) comprise at least one optical fiber of chosen dimensions.

5. System for emitting as claimed in the preceding claim, wherein the optical fiber is microstructured and/or doped and/or with a transverse dimension decreasing according to the propagation ("taper").

6. System for emitting according to one of the preceding claims, wherein the two sub-cavities (3, 4) comprise at each of their ends a means (10, 11, 12) for partially reflecting light.

7. System for emitting as claimed in the preceding claim, wherein the means (10, 11, 12) for partially reflecting light are Bragg reflectors.

8. System for emitting according to claim 7, wherein the coupling of the two sub-cavities (3, 4) occurs by the disposition of a means (11) for partially reflecting shared by said two sub-cavities (3, 4).

9. System for emitting according to one of the preceding claims, wherein the first sub-cavity (3) comprises means (8) for generating a short pulse.

10. System for emitting according to one of the preceding claims, the means (8) for generating a short pulse comprise a saturable absorber.

11. System for emitting according to claim 10 wherein the second sub-cavity (4) comprises means (9) of triggering external to the latter arranged in such a way that the triggering of said second sub-cavity (4) provokes the departure of the short pulse generated by said first sub-cavity (3).

12. System for emitting as claimed in the preceding claim, wherein the external means (9) for triggering comprise an acousto-optic modulator.

13. System for emitting according to claim 12, wherein the means (1) for optically pumping are arranged in such a way as to emit radiation (2) with power substantially close to the laser emission threshold of the first sub-cavity (3) without reaching it.

14. System for emitting according to one of claims 12 or 13, wherein the external means (9) for triggering are synchronized.
